# EUROPEAN PATENT SPECIFICATION

(11) **EP 2 108 575 B1**
(45) Date of publication and mention of the grant of the patent: **05.09.2012**
(21) Application number: 08007110.3
(22) Date of filing: 10.04.2008
(51) Int. Cl.: B62K 21/04

(54) **Process of making a base of shock-absorbing front fork for bicycle**
Herstellungsverfahren einer Basis einer stoßdämpfenden Vorderradgabel für ein Fahrrad
Procédé de fabrication d'une base de fourche avant à absorption des chocs pour bicyclette

(43) Date of publication of application: 14.10.2009
(73) Proprietor: Yuan Min An Enterprise Co., Ltd., Fong Yuan, Taichung (TW)
(72) Inventor: Yu, Kuo-Pin, Fong Shih Road, Fong Yuan Taichung (TW)
(74) Representative: Becker Kurig Straus

(56) References cited:
- EP-A- 1 864 893
- FR-A- 947 033
- GB-A- 507 202
- GB-A- 2 385 568
- US-A- 5 078 417
- US-A- 5 181 732
- US-A- 5 944 932
- US-B1- 6 352 276

## Description

### BACKGROUND OF THE INVENTION

### 1. Field of the Invention

The present invention, which is claimed in claims 1 and 2, relates generally to a bicycle, and more specifically to a process of making a base of a shock-absorbing front fork for a bicycle, which has advantages of high structural strength and long service life such that the base is suitable to be mounted on a mountain bicycle especially.

### 2. Description of the Related Art

A conventional shock-absorbing front fork for a bicycle includes an upper frame and a base. The upper frame has an upright tube, a fork crown connected with a bottom end of the upright tube, and two branch tubes respectively extending downward from each of two ends of the fork crown. The base has two straight tubes for receiving the branch tubes of the upper frame, and a bridge connected with the straight tubes. A front wheel is pivotally mounted to bottom ends of the straight tubes. Silicone oil and/or a spring are received inside each straight tube to provide a shock-absorbing effect.

However, the straight tubes and the bridge are manufactured individually and connected with each other by adhesive. After the base is used for a long time, the adhesive between the straight tubes and the bridge will easily generate crevices due to the fatigue or the decline of the adhesive, causing separation of the straight tubes and the bridge.

US 5,078,417 pertains to method for preparing a fork of a bicycle and is regarded as constituting the closest prior art. The fork comprises crown and blade components molded together. Blade and crown walls are formed may be formed from strips and patches of prepreg material.

### SUMMARY OF THE INVENTION

The present invention has been accomplished in view of the above-noted circumstances. It is one objective of the present invention to provide a base of a shock-absorbing front fork for a bicycle, which has high structural strength.

It is another objective of the present invention to provide a base of a shock-absorbing front fork for a bicycle, which has long service life.

According to one embodiment of the present invention a process of making a base of a shock-absorbing front fork for a bicycle is disclosed. Said process comprises:
a) providing two straight tubes, each of which have a large diameter portion located at an upper section thereof and a small diameter portion;
b) curing the two straight tubes;
c) winding pre-pregs around the upper section of each of two cured straight tubes (20) to form a model of a bridge having a foamed core therein;
d) placing the model of the bridge and the foamed core in a mold;
e) heating the mold in a way that the pre-pregs are abutted against an inner wall of the mold due to inflation of the foamed core so as to cure the model into a desired shape; and
f) obtaining the base such that the bridge and the straight tubes are connected integrally, wherein the base is made of fiber reinforced resin.

According to another embodiment of the present invention process of making a base of a shock-absorbing front fork for a bicycle is disclosed. Said process comprises:
a) providing two straight tubes, each of which have a large diameter portion located at an upper section thereof and a small diameter portion;
b) curing the two straight tubes;
c) winding pre-pregs around the upper section pf each of two cured straight tubes to form a model of the bridge having a liquid or solid, which can be changed to gas after heat treatment therein;
d) placing the model of the bridge and the liquid or solid in a mold;
e) heating the mold in a way that the pre-pregs are abutted against an inner wall of the mold due to gas into which the liquide or solid is changed after the liquid or solid is heated so as to cure the model into a desired shape; and
f) obtaining the base such that the bridge and the straight tubes are connected integrally, wherein the base is made of fiber reinforced resin.

Accordingly, the base has high structural strength and long service life.

Further scope of applicability of the present invention will become apparent from the detailed description given hereinafter. However, it should be understood that the detailed description and specific examples, while indicating preferred embodiments of the invention, are given by way of illustration only, since various changes and modifications will become apparent to those skilled in the art from this detailed description.

### BRIEF DESCRIPTION OF THE DRAWINGS

The present invention will become more fully understood from the detailed description given herein below and the accompanying drawings which are given by way of illustration only, and thus are not limitative of the present invention, and wherein:
FIG. 1 is a front view of the base ;
FIG. 2 is a top view of the base ;
FIG. 3 is a lateral view of the base ;
FIG. 4 is a sectional view taken along line 4-4 of FIG 1, and
FIG. 5 is a sectional view taken along line 5-5 of FIG 1.

### DETAILED DESCRIPTION OF THE INVENTION

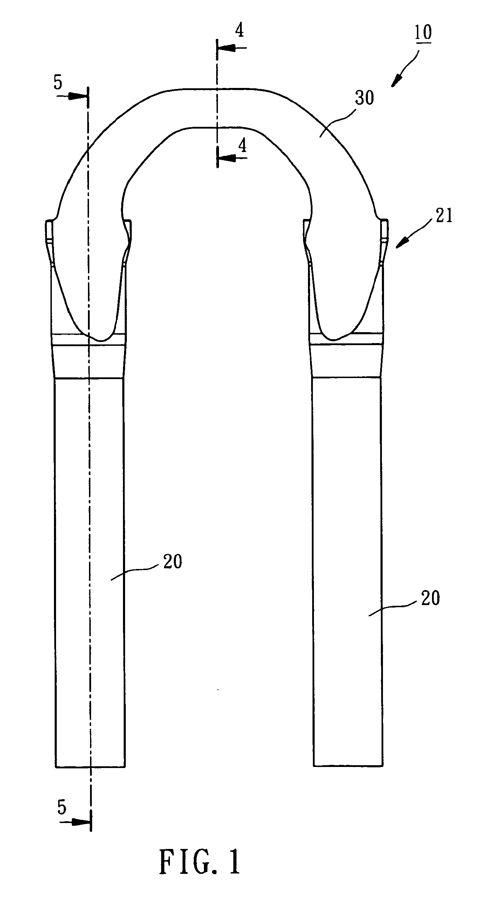

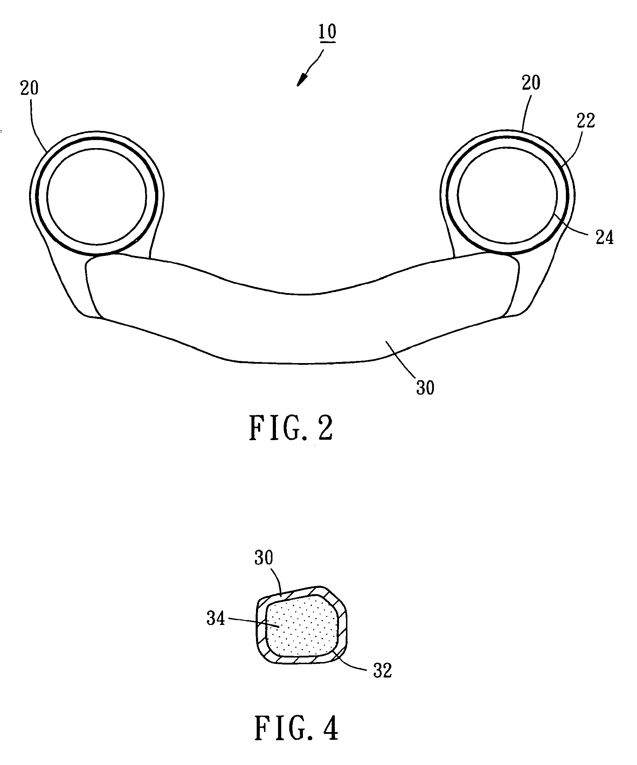

As shown in FIGS. **1-4**, a base **10** of a shock-absorbing front fork for a bicycle is made of fiber reinforced resin. The fiber can adopt, but not limited to, carbon fiber, glass fiber, boron fiber or Kevlar fiber. The resin can adopt, but not limited to, thermosetting resin or thermoplastic resin. The base **10** comprises two straight tubes **20** and a bridge **30**.

The straight tubes **20** each have a large diameter portion **22** located at an upper section **21** thereof for accommodation of an oil seal (not shown), and a small diameter portion **24** for receiving a branch tube of an upper frame (not shown).

The bridge **30** has two ends connected integrally with the upper section **21** of each of the straight tubes **20**, a chamber **32** therein, and a foamed core **34** inside the chamber **32**.

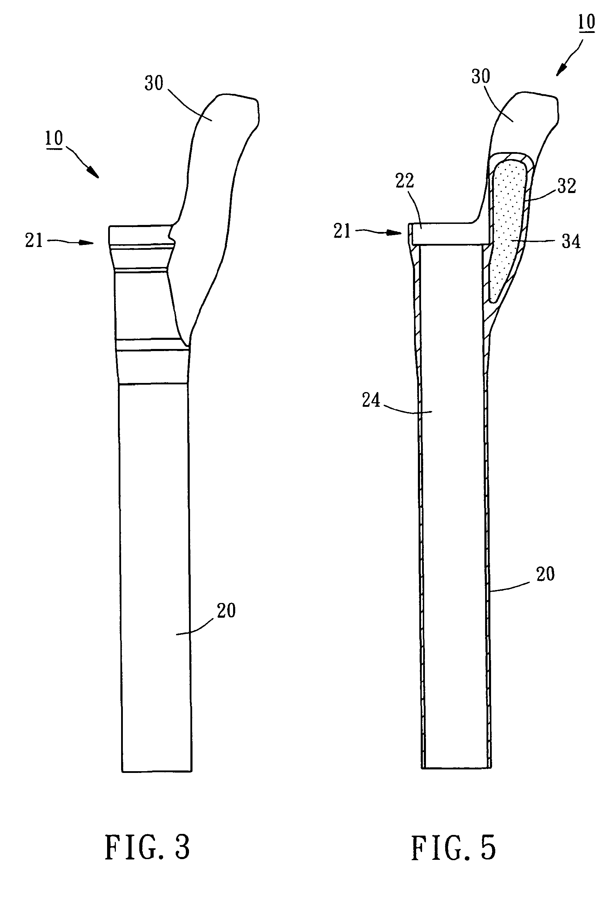

During the actual manufacture, the two straight tubes **20** are cured first, and then pre-pregs are wound around the upper sections **21** of the straight tubes **20** to form a model of the bridge **30** having the foamed core **34** therein. Next, the model of the bridge **30** and the foamed core **34** are placed in a mold (not shown) to be cured into its desired shape with heat treatment such that the pre-pregs are abutted against an inner wall of the mold due to inflation of the foamed core **34**. As a result, the bridge **30** and the straight tubes **20** can be connected integrally with each other without any gap between the bridge **30** and the straight tubes **20**, as shown in FIG. 5. Therefore the structure strength of the base **10** is high enough to bear high stress, and the service life of the base **10** is long such that the base **10** is suitable to be mounted on a mountain bicycle especially.

The base **10** of the shock-absorbing front fork of the present invention can be made with various kinds of design. For example, the foamed core **34** can be replaced by other liquids or solids, which can be changed to gas after heat treatment. Further, the shape of the large diameter portions **22** and the small diameter portions **24** of the straight tubes **20** are not limited to the above-mentioned embodiment, even the large diameter portions **22** and the small diameter portions **24** can be eliminated subject to the actual need.

## Claims

1. A process of making a base (10) of a shock-absorbing front fork for a bicycle comprising:
a) providing two straight tubes (20), each of which have a large diameter portion (22) located at an upper section (21) thereof and a small diameter portion (24);
b) curing the two straight tubes (20);
c) winding pre-pregs around the upper section (21) of each of two cured straight tubes (20) to form a model of a bridge having a foamed core (34) therein;
d) placing the model of the bridge (30) and the foamed core (34) in a mold;
e) heating the mold in a way that the pre-pregs are abutted against an inner wall of the mold due to inflation of the foamed core (34) so as to cure the model into a desired shape; and
f) obtaining the base (10) such that the bridge and the straight tubes are connected integrally, wherein the base is made of fiber reinforced resin.

2. A process of making (10) a base of a shock-absorbing front fork for a bicycle comprising:
a) providing two straight tubes (20), each of which have a large diameter portion (22) located at an upper section (21) thereof and a small diameter portion (24);
b) curing the two straight tubes (20);
c) winding pre-pregs around the upper section (21) of each of two cured straight tubes (20) to form a model of the bridge having a liquid or solid, which can be changed to gas after heat treatment therein;
d) placing the model of the bridge (30) and the liquid or solid in a mold;
e) heating the mold in a way that the pre-pregs are abutted against an inner wall of the mold due to gas into which the liquid or solid is changed after the liquid or solid is heated so as to cure the model into a desired shape; and
f) obtaining the base (10) such that the bridge and the straight tubes are connected integrally, wherein the base is made of fiber reinforced resin.

## Patentansprüche

1. Verfahren zur Herstellung einer Basis (10) einer stoßdämpfenden Vordergabel für ein Fahrrad, umfassend:
a) Bereitstellen von zwei geraden Röhren (20), worin jede davon einen Abschnitt mit großem Durchmesser (22), welcher an einem oberen Abschnitt (21) davon angeordnet ist, und einen Abschnitt mit einem geringen Durchmesser (24) aufweist;
b) Härten der zwei geraden Röhren (20);
c) Winden von Prepregs um den oberen Abschnitt (21) von jeder der zwei gehärteten geraden Röhren (20), um ein Modell einer Brücke mit einem darin enthaltenen geschäumten Kern zu bilden;
d) Anordnen des Modells der Brücke (30) und des geschäumten Kerns (34) in einer Form;
e) Erhitzen der Form auf eine Art, dass die Prepregs aufgrund einer Ausdehnung des geschäumten Kerns (34) gegen eine innere Wand der Form stoßen, um so das Modell in einer bestimmten Form zu härten; und
f) Erhalten der Basis (10), so dass die Brücke und die geraden Röhren einstückig verbunden sind, wobei die Basis aus faserverstärktem Harz hergestellt ist.

2. Verfahren zur Herstellung einer Basis (10) einer stoßdämpfenden Vordergabel für ein Fahrrad, umfassend:
a) Bereitstellen von zwei geraden Röhren (20), worin jede davon einen Abschnitt mit großem Durchmesser (22), welcher an einem oberen Abschnitt (21) davon angeordnet ist, und einen Abschnitt mit einem geringen Durchmesser (24) aufweist;
b) Härten der zwei geraden Röhren (20);
c) Winden von Prepregs um den oberen Abschnitt (21) von jeder der zwei gehärteten geraden Röhren (20), um ein Modell einer Brücke zu bilden, welche eine Flüssigkeit oder einen Feststoff darin aufweist, welche/welcher nach einer Hitzebehandlung zu Gas umgewandelt werden können;
d) Platzieren des Modells der Brücke (30) und der Flüssigkeit oder des Feststoffs in einer Form;
e) Erhitzen der Form auf eine Art, dass die Prepregs gegen eine innere Wand der Form aufgrund von Gas stoßen, in welches sich die Flüssigkeit oder der Feststoff umwandeln, nachdem die Flüssigkeit oder der Feststoff erhitzt wird, um so das Modell in eine bestimmte Form zu härten; und
f) Erhalten der Basis (10), so dass die Brücke und die geraden Röhren einstückig verbunden sind, wobei die Basis aus faserverstärktem Harz hergestellt ist.

## Revendications

1. Procédé de fabrication d'une base (10) d'une fourche frontale amortissant les chocs d'une bicyclette comprenant de :
a) fournir deux tubes droits (20), ayant chacun une portion de diamètre large (22) située au niveau d'une section supérieure (21) de ceux-ci et une portion de diamètre étroit (24) ;
b) thermodurcir les deux tubes droits (20) ;
c) enrouler des préimprégnés autour de la section supérieure (21) de chacun des deux tubes droits thermodurcis (20) afin de former un modèle d'un pont ayant à l'intérieur un noyau de mousse (34) ;
d) placer le modèle du pont (30) et le noyau en mousse (34) dans un moule ;
e) chauffer le moule d'une manière telle que les préimprégnés viennent buter contre une paroi intérieure du moule en raison du gonflement du noyau en mousse (34) de manière à thermodurcir le modèle en une forme désirée ; et
f) obtenir la base (10) de telle sorte que le pont et les tubes droits soient raccordés en un seul tenant, dans lequel la base est fabriquée en résine renforcée par des fibres.

2. Procédé de fabrication (10) d'une base d'une fourche frontale amortissant les chocs d'une bicyclette comprenant de :
a) fournir deux tubes droits (20), ayant chacun une portion de diamètre large (22) située au niveau d'une section supérieure (21) de ceux-ci et une portion de diamètre étroit (24) ;
b) thermodurcir les deux tubes droits (20) ;
c) enrouler des préimprégnés autour de la section supérieure (21) de chacun des deux tubes droits (20) afin de former un modèle du pont contenant à l'intérieur un liquide ou un solide qui peut être changé en gaz après le traitement thermique ;
d) placer le modèle du pont (30) et le liquide ou solide dans un moule ;
e) chauffer le moule d'une manière telle que les préimprégnés viennent buter contre une paroi intérieure du moule en raison du gaz en lequel le liquide ou solide est changé après que le liquide ou solide a été chauffé de manière à thermodurcir le modèle en une forme désirée ; et
f) obtenir la base (10) de telle sorte que le pont et les tubes droits soient raccordés en un seul tenant, dans lequel la base est fabriquée en résine renforcée par des fibres.
